(19) Europäisches Patentamt
European Patent Office
Office européen des brevets

(11) Veröffentlichungsnummer: **0 137 174**
**B1**

(12) # EUROPÄISCHE PATENTSCHRIFT

(45) Veröffentlichungstag der Patentschrift: **02.11.88**

(51) Int. Cl.⁴: **C 07 C 131/00**, A 01 N 35/10

(21) Anmeldenummer: **84109099.6**

(22) Anmeldetag: **01.08.84**

(54) **Cyclohexan-1,3-dionderivate, Verfahren zu ihrer Herstellung und ihre Verwendung zur Bekämpfung unerwünschten Pflanzenwuchses.**

(30) Priorität: **11.08.83 DE 3329017**

(43) Veröffentlichungstag der Anmeldung: **17.04.85 Patentblatt 85/16**

(45) Bekanntmachung des Hinweises auf die Patenterteilung: **02.11.88 Patentblatt 88/44**

(84) Benannte Vertragsstaaten: **BE CH DE FR GB IT LI NL**

(56) Entgegenhaltungen:
**EP-A-0 060 301**
**EP-A-0 085 529**
**EP-A-0 085 530**
**EP-A-0 088 299**

**CHEMICAL ABSTRACTS Band 86, Nr. 3, 17 Januar 1977, Columbus, Ohio, USA; M. SAWAKI et al. "2-Cyclohexen-1-one-derivatives", Seite 397, Spalte 2, Zusammenfassung Nr. 16357h**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Keil, Michael, Dr., Fontanestrassse 4, D-6713 Freinsheim (DE)**
Erfinder: **Jahn, Dieter, Dr., Burgunder Weg 8, D-6803 Edingen- Neckarhausen (DE)**
Erfinder: **Becker, Rainer, Dr., Im Haseneck 22, D-6702 Bad Duerkheim (DE)**
Erfinder: **Rohr, Wolfgang, Dr., In der Dreispitz 13, D-6706 Wachenheim (DE)**
Erfinder: **Wuerzer, Bruno, Dr. Dipl.- Landwirt, Ruedigerstrasse 13, D-6701 Otterstadt (DE)**

**EP 0 137 174 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft Cyclohexan-1,3-dionderivate, Verfahren zu ihrer Herstellung, sowie Herbizide, die diese Verbindungen als Wirkstoff enthalten.

Es ist bekannt, Cyclohexan-1,3-dionderivate zur Bekämpfung von unerwünschten Gräsern in breitblättrigen Kulturen anzuwenden (DE-OS-2 439 104; EP-OS-0 080 301; EP-OS-0 082 694; EP-OS-0 085 529; EP-OS-0 085 530; US-PS-3 950 420; C.A. 86, 16357 h (1977)).

Die aus den vorstehenden Druckschriften bekannten Verbindungen können jedoch hinsichtlich verschiedener Merkmale der herbiziden Wirkung durch neue Verbindungen übertroffen werden.

Es wurde gefunden, daß Cyclohexan-1,3-dion-derivate der Formel

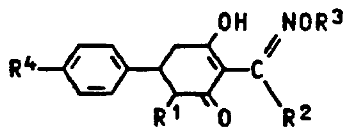 (I),

in der

$R^4$ fluorsubstituiertes $C_1$-$C_3$-Alkoxy, $C_3$-$C_5$-Alkinyloxy, Trifluormethyl,
$R^1$ Wasserstoff, Methoxycarbonyl, Ethoxycarbonyl, Methyl oder Cyano,
$R^2$ $C_1$-$C_4$-Alkyl und
$R^3$ $C_1$-$C_3$-Alkyl, $C_3$- oder $C_4$-Alkenyl, $C_3$- oder $C_4$-Halogenalkenyl mit 1 bis 3 Halogensubstituenten oder Propargyl bedeuten,

und Salze dieser Verbindungen gegen Gräser herbizid wirksam sind und sowohl breitblättrige Kulturpflanzen als auch monokotyle Kulturen, welche nicht zur Familie der Gräser (Gramineen) zählen, nicht schädigen. Darüber hinaus ist es auch möglich, mit Verbindungen der Formel I selektiv unerwünschte Gräser in bestimmten Kulturgrasarten, wie Reis und Getreide, zu bekämpfen.

Die Verbindungen der Formel I können in mehreren Formen auftreten, die alle vom Patentanspruch umfaßt werden; im folgenden wird der Molekülrest $R^4$-Phenyl mit "A" bezeichnet.

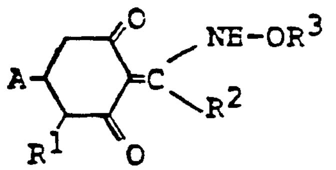

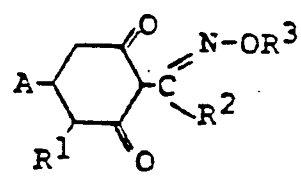

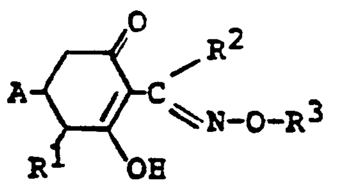

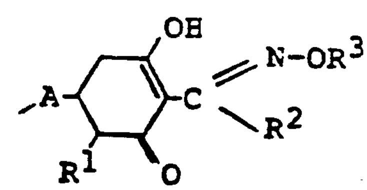

A bedeutet demnach einen in para-Stellung monosubstituierten Phenylrest mit Substituenten aus der Gruppe, bestehend aus fluorsubstituiertem $C_1$-$C_3$-Alkoxy, $C_3$-$C_5$-Alkinyloxy, Trifluormethyl, $R^1$ in Formel I bedeutet Wasserstoff, Methoxycarbonyl, Ethoxycarbonyl, Methyl oder Cyano.

$R^2$ in Formel I steht für unverzweigte oder verzweigte $C_1$-$C_4$-Alkylreste, d. h. für Methyl, Ethyl, n-Propyl, i-Propyl, n-Butyl, sec.-Butyl, i-Butyl, tert.-Butyl.

Reste für $R^3$ in Formel I sind Propargyl, $C_1$-$C_3$-Alkyl, $C_3$- oder $C_4$-Alkenyl oder $C_3$- oder $C_4$-Halogenalkenyl, das bis zu drei Halogensubstituenten enthalten kann, beispielsweise Methyl, Ethyl, n-Propyl, i-Propyl, n-Butyl, sec.-Butyl, i-Butyl, tert.-Butyl, Allyl, 1-Chlorprop-1-en-3-yl, 2-Chlorprop-1-en-3-yl, 1,3-Dichlorprop-1-en-3-yl, 1,1,2-Trichlorprop-1-en-3-yl.

Als Salze der Verbindungen der Formel I kommen beispielsweise die Alkalimetallsalze, insbesondere die Kalium- oder Natriumsalze, Erdalkalimetallsalze, insbesondere Calcium-, Magnesium- oder Bariumsalzesowie Mangan-, Kupfer-, Zink- oder Eisensalze und Ammonium- und Phosphoniumsalze, beispielsweise Alkylammonium-, Dialkylammonium-, Trialkyl- oder Tetraalkylammoniumsalze, Benzyltrialkylammoniumsalze, Triphenylphosphoniumsalze, Trialkylsulfoniumsalze oder Trialkylsulfoxoniumsalze in Betracht.

Die Verbindungen der Formel I können durch Umsetzung von Verbindungen der Formel

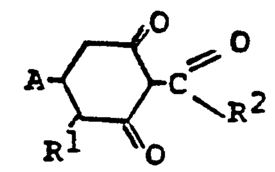

(II),

in der A, $R^1$ und $R^2$ die obengenannten Bedeutungen haben, mit Hydroxylaminderivaten $R^3O\text{-}NH_3Y$ in der $R^3$ die obengenannten Bedeutungen hat und Y ein Anion bedeutet, erhalten werden.

Man führt die Reaktion zweckmäßigerweise in heterogener Phase in einem inerten Verdünnungsmittel bei einer Temperatur zwischen 0 und 80°C oder zwischen 0°C und dem Siedepunkt des Reaktionsgemisches in Gegenwart einer Base durch. Geeignete Basen sind beispielsweise Carbonate, Hydrogencarbonate, Acetate, Alkoholate, Hydroxide oder Oxide von Alkali- oder Erdalkalimetallen, insbesondere von Natrium, Kalium, Magnesium, Calcium. Außerdem können auch organische Basen, wie Pyridin oder tertiäre Amine, Verwendung finden.

Die Umsetzung verläuft besonders gut in einem pH-Bereich von 2 bis 9, insbesondere von 4,5 bis 5,5. Die Einstellung des pH-Bereiches erfolgt zweckmäßigerweise durch Zusatz von Acetaten, beispielsweise Alkalimetallacetaten, imsbesondere von Natrium- oder Kaliumacetat oder einer Hischung aus beiden Salzen. Alkalimetallacetate werden beispielsweise in Mengen von 0,5 bis 2 Mol, bezogen auf die Ammoniumverbindung der Formel $R^3O\text{-}NH_3Y$, zugesetzt.

Als Lösungsmittel sind beispielsweise Dimethylsulfoxid, Alkohole, wie Methanol, Ethanol, Isopropanol, Benzol, gegebenenfalls chlorierte Kohlenwasserstoffe, wie Chloroform, Dichlorethan, Hexan, Cyclohexan, Ester, wie Essigsäureethylester, Ether, wie Dioxan, Tetrahydrofuran, geeignet.

Die Umsetzung ist nach wenigen Stunden beendet, das Reaktionsprodukt kann dann durch Einengen der Mischung, Zugabe von Wasser und Extraktion mit einem unpolaren Lösungsmittel, wie Methylenchlorid, und Abdestillieren des Lösungsmittels unter vermindertem Druck isoliert werden.

Die Verbindung der Formel I können außerdem durch Umsetzen der Verbindungen der Formel II mit Hydroxylaminen der Formel $R^3O\text{-}NH_2$, in der $R^3$ die obengenannten Bedeutungen hat, in inerten Verdünnungsmitteln bei einer Temperatur zwischen 0°C und dem Siedepunkt des Reaktionsgemisches, insbesondere zwischen 15 und 70°C, erhalten werden. Gegebenenfalls kann das Hydroxylamin als wäßrige Lösung eingesetzt werden.

Geeignete Lösungsmittel für diese Umsetzung sind beispielsweise Alkohole, wie Nethanol, Ethanol, Isopropanol, Cyclohexanol, gegebenenfalls chlorierte Kohlenwasserstoffe, wie Hexan, Cyclohexan, Hethylenchlorid, Toluol, Dichlorethan, Ester, wie Essigsäureethylester, Nitrile, wie Acetonitril, cyclische Ether, wie Tetrahydrofuran.

Die Alkalimetallsalze der Verbindungen der Formel I können durch Behandeln dieser Verbindungen mit Natrium- oder Kaliumhydroxid in wäßriger Lösung oder in einem organischen Lösungsmittel, wie Methanol, Ethanol, Aceton, erhalten werden. Auch Natrium- und Kaliumalkoholate können als Basen dienen.

Die anderen Hetallsalze, z. B. die Mangan-, Kupfer-, Zink-, Eisen-, Calcium-, Magnesium- und Bariumsalze können aus den Natriumsalzen durch Reaktion mit den entsprechenden Hetallchloriden in wäßriger Lösung hergestellt werden. Ammonium-, Phosphonium, Sulfonium- und Sulfoxoniumsalze können durch Umsetzung von Verbindungen der Formel I mit Ammonium-, Phosphonium-, Sulfonium- oder Sulfoxoniumhydroxiden gegebenenfalls in wäßriger Lösung hergestellt werden.

Die Verbindungen der Formel II können aus Cyclohexan-1,3-dionen der Formel III, die auch in den tautomeren Formeln IIIa und IIIb vorliegen können,

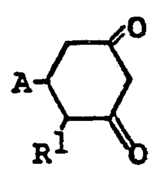

(III)

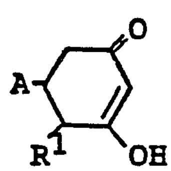

(IIIa)

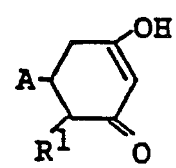

(IIIb)

nach literaturbekannten Methoden (Tetrahedron Letters, 29, 2491 (1975)) hergestellt werden.

Es ist auch möglich, Verbindungen der Formel II über die Zwischenstufe der Enolester, die bei der Umsetzung von Verbindungen der Formel II eventuell als Isomerengemische anfallen und in Gegenwart von Imidazoloder Pyridinderivaten umgelagert werden (JP-OS 79/063052), herzustellen.

Zu den Verbindungen der Formel III gelangt man nach literaturbekannten Verfahren, wie dies aus folgendem Schema hervorgeht:

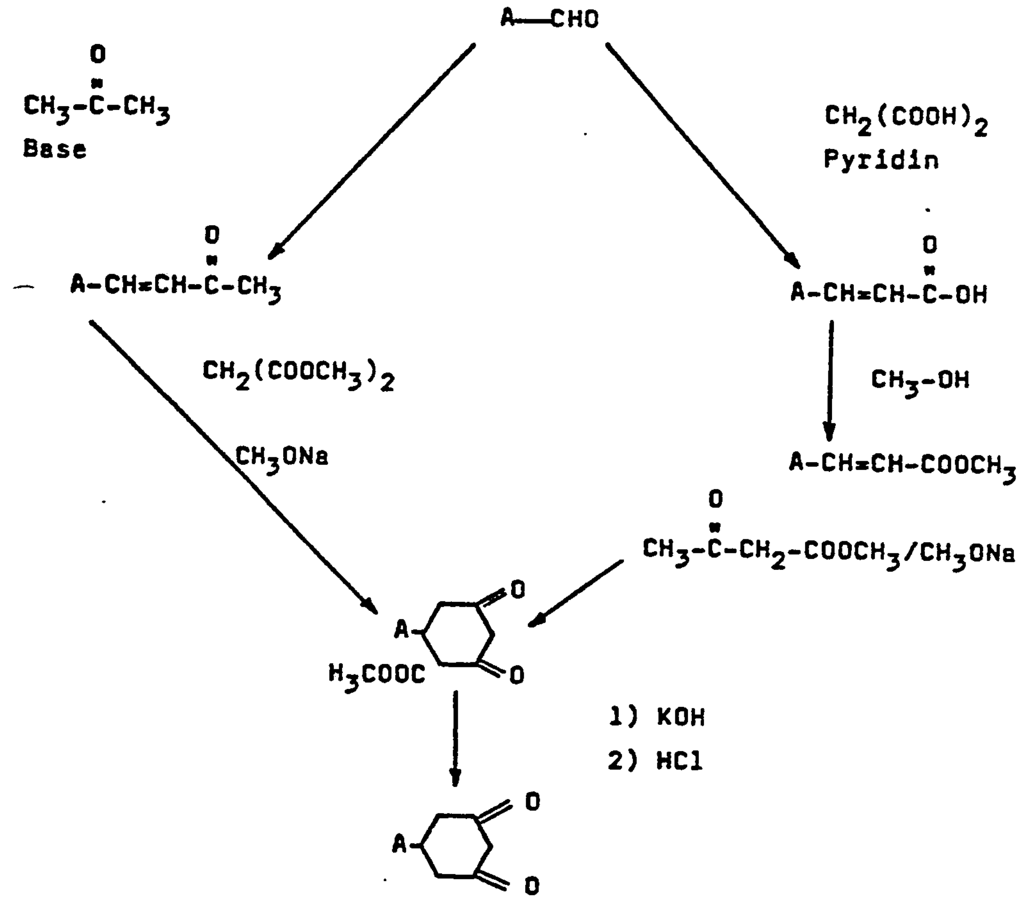


Die Aldehyde A-CHO als Ausgangsverbindungen können nach literaturbekannten Verfahren, z. B. Vilsmeier-Formylierung, Oxidation von Alkoholen, Reduktion von Carbonsäurederivaten etc. hergestellt werden.

Das folgende Beispiel erläutert die Herstellung der Cyclohexan-1,3-dion-derivate der Formel I. In diesem Beispiel verhalten sich Gewichtsteile zu Volumenteilen wie Kilogramm zu Liter.

**Beispiel 1**

7,0 Gewichtsteile 2-Butyryl-5-(4-phenoxy-phenyl)-cyclohexan-1,3-dion werden in 50 Volumenteilen Hethanol gelöst, und zu dieser Mischung werden 2,15 Gewichtsteile Ethoxyammoniumchlorid und 1,85 Gewichtsteile Natriumhydrogencarbonat gegeben. Die Mischung wird 12 Stunden bei Raumtemperatur gerührt, dann wird unter vermindertem Druck eingeengt, der Rückstand wird mit 100 Teilen Dichlormethan und 100 Teilen Wasser gerührt, die organische Phase abgetrennt, die wäßrige Phase mit 50 Teilen Dichlormethan extrahiert, die vereinigten organischen Phasen werden mit Wasser gewaschen, über Natriumsulfat getrocknet und unter vermindertem Druck eingeengt.

Man erhält 6,9 Teile 2-(1-Ethoxyaminobutyliden)-5-(4-phenoxyphenyl)-cyclohexan-1,3-dion vom $n^{22}_D = 1{,}5670$ (Wirkstoff Nr. 76).

$C_{24}H_{27}NO_4$ (393)

| | | | |
|---|---|---|---|
| Ber: | C 73,26 | H 6,92 | N 3,56 |
| Gef.: | C 72,7 | H 7,0 | N 3,5 |

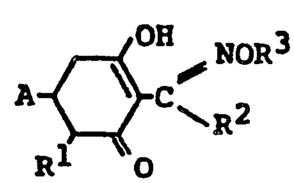

| Wirkstoff Nr. | A | $R^1$ | $R^2$ | $R^3$ | $n_D$(°C)/Fp[°C] |
|---|---|---|---|---|---|
| 1 | 2-Methoxyphenyl | $COOCH_3$ | n-$C_3H_7$ | $C_2H_5$ | |
| 2 | " | " | " | $CH_2=CH-CH_2$ | |
| 3 | " | " | $C_2H_5$ | " | |
| 4 | " | " | " | $C_2H_5$ | |
| 5 | " | H | n-$C_3H_7$ | " | 1,5509 (23) |
| 6 | " | H | " | $CH_2=CH-CH_2$ | 1,5489 (23) |
| 7 | " | H | $C_2H_5$ | $C_2H_5$ | 1,5612 (20) |
| 8 | " | H | " | $CH_2=CH-CH_2$ | 1,5631 (20) |
| 9 | 2-Ethoxyphenyl | H | n-$C_3H_7$ | " | |
| 10 | " | H | " | $C_2H_5$ | |
| 11 | 3-Methoxyphenyl | $COOCH_3$ | " | $CH_2=CH-CH_2$ | |
| 12 | " | " | $C_2H_5$ | " | |
| 13 | " | H | n-$C_3H_7$ | $C_2H_5$ | |
| 14 | 3-Methoxyphenyl | H | $C_2H_5$ | $C_2H_5$ | 1,5378 (28) |
| 15 | " | H | " | $CH_2=CH-CH_2$ | 1,5552 (25) |
| 16 | 3-Ethoxyphenyl | H | n-$C_3H_7$ | $C_2H_5$ | |
| 17 | " | H | " | $CH_2=CH-CH_2$ | |
| 18 | 2-Nitrophenyl | H | " | " | |
| 19 | " | H | " | $C_2H_5$ | |
| 20 | 3-Nitrophenyl | $COOCH_3$ | n-$C_3H_7$ | $C_2H_5$ | |
| 21 | " | " | " | $CH_2=CH-CH_2$ | |
| 22 | " | " | $C_2H_5$ | $C_2H_5$ | |
| 23 | " | " | " | $CH_2=CH-CH_2$ | |
| 24 | " | H | n-$C_3H_7$ | $C_2H_5$ | |
| 25 | " | H | " | $CH_2=CH-CH_2$ | 1,5645 (23) |
| 26 | " | H | $C_2H_5$ | $C_2H_5$ | 1,5672 (23) |
| 27 | " | H | " | $CH_2=CH-CH_2$ | 1,5648 (25) |
| 28 | 2-Chlorphenyl | H | n-$C_3H_7$ | $C_2H_5$ | 47 |
| 29 | " | H | " | $CH_2=CH-CH_2$ | |
| 30 | 2-Fluorphenyl | H | " | $C_2H_5$ | 47 - 50 |
| 31 | " | H | " | $CH_2=CH-CH_2$ | 36 |
| 32 | 3-Fluorphenyl | H | " | $C_2H_5$ | 1,5452 (24) |
| 33 | " | H | " | $CH_2=CH-CH_2$ | |
| 34 | 2-Methylsulfonylphenyl | H | " | " | |
| 35 | " | H | " | $C_2H_5$ | |
| 36 | 3-Methylsulfonylphenyl | H | " | " | |
| 37 | " | H | " | $CH_2=CH-CH_2$ | |
| 38 | 4-Isopropylphenyl | H | " | " | |
| 39 | " | $COOCH_3$ | " | " | |
| 40 | " | H | " | $C_2H_5$ | |
| 41 | 4-tert.-Butylphenyl | H | n-$C_3H_7$ | $CH_2=CH-CH_2$ | 60 - 64 |
| 42 | " | H | " | $C_2H_5$ | 50 - 52 |
| 43 | 4-tert.-Butylphenyl | $COOCH_3$ | n-$C_3H_7$ | $CH_2=CH-CH_2$ | 62 - 66 |
| 44 | " | " | " | $C_2H_5$ | |
| 45 | Biphenyl-4-yl | " | " | " | 88 |
| 46 | " | " | " | $CH_2=CH-CH_2$ | |
| 47 | " | H | " | $C_2H_5$ | 88 |
| 48 | " | H | " | $CH_2=CH-CH_2$ | 54 |

| | | | | | |
|---|---|---|---|---|---|
| 49 | 4-Ethoxyphenyl | H | " | $C_2H_5$ | 57 - 61 |
| 50 | " | H | " | $CH_2=CH-CH_2$ | 55 |
| 51 | " | H | $C_2H_5$ | " | 67 - 70 |
| 52 | " | H | " | $C_2H_5$ | 69 - 71 |
| 53 | 4-tert.-Butoxyphenyl | H | n-$C_3H_7$ | " | |
| 54 | " | H | " | $CH_2=CH-CH_2$ | |
| 55 | 4-Difluormethoxy-phenyl | $COOCH_3$ | n-$C_3H_7$ | $C_2H_5$ | 1,5248 (25) |
| 56 | " | " | " | $H-C=C-CH_2$ | 1,5315 (25) |
| 57 | " | " | $C_2H_5$ | $CH_2=CH-CH_2$ | 1,5330 (28) |
| 58 | " | " | " | n-$C_3H_7$ | 1,5252 (28) |
| 59 | " | H | " | $C_2H_5$ | 65 - 67 |
| 60 | " | H | " | n-$C_3H_7$ | 54 - 56 |
| 61 | " | H | " | $HC\equiv C-CH_2$ | 64 - 66 |
| 62 | " | H | n-$C_3H_7$ | n-$C_3H_7$ | 70 - 72 |
| 63 | 4-(1,1,2,2-Tetrafluor-ethoxy)-phenyl | $COOCH_3$ | " | $CH_2=CH-CH_2$ | |
| 64 | " | H | " | $C_2H_5$ | 47 |
| 65 | " | H | " | $CH_2=CH-CH_2$ | |
| 66 | 4-(1,1,2,2-Tetrafluor-ethoxy)-phenyl | H | $C_2H_5$ | $CH_2=CH-CH_2$ | 58 |
| 67 | " | H | " | $C_2H_5$ | 81 - 84 |
| 68 | 3-(1,1,2,2-Tetrafluor-ethoxy)-phenyl | $COOCH_3$ | n-$C_3H_7$ | $CH_2=CH-CH_2$ | |
| 69 | " | " | " | $C_2H_5$ | |
| 70 | " | H | " | " | |
| 71 | " | H | " | $CH_2=CH-CH_2$ | |
| 72 | 3-(2-Chlor-4-trifluor-methylphenoxy)-phenyl | H | " | " | 1,5475 (25) |
| 73 | 4-(2-Chlor-4-nitro-phenoxy)-phenyl | H | " | $C_2H_5$ | |
| 74 | " | H | " | $CH_2=CH-CH_2$ | |
| 75 | 4-Phenoxyphenyl | H | " | " | 1,5816 (22) |
| 76 | " | H | " | $C_2H_5$ | 1,5670 (22) |
| 77 | " | H | $C_2H_5$ | " | |
| 78 | " | H | " | $CH_2=CH-CH_2$ | |
| 79 | 4-(Prop-2-inoxy)--phenyl | H | n-$C_3H_7$ | $C_2H_5$ | 1,5458 (28) |
| 80 | " | H | " | $CH_2=CH-CH_2$ | 1,5645 (28) |
| 81 | " | H | " | n-$C_3H_7$ | 1,5518 (28) |
| 82 | 4-(Prop-2-inoxy)--phenyl | H | $C_2H_5$ | $C_2H_5$ | |
| 83 | " | H | " | $CH_2=CH-CH_2$ | 1,5722 (28) |
| 84 | " | H | " | n-$C_3H_7$ | |
| 85 | " | H | " | $CH\equiv C-CH_2$ | |
| 86 | 4-Allyloxyphenyl | H | n-$C_3H_7$ | $C_2H_5$ | 54 - 57 |
| 87 | " | H | " | $CH_2=CH-CH_2$ | 53 - 57 |
| 88 | " | H | $CH_2=CH-CH_2$ | $C_2H_5$ | |
| 89 | " | H | $C_2H_5$ | " | |

| | | | | | |
|---|---|---|---|---|---|
| 90 | 2-(But-2-enyloxy)-phenyl | H | n-$C_3H_7$ | " | |
| 91 | " | H | " | $CH_2=CH-CH_2$ | |
| 92 | 4-Benzyloxyphenyl | H | " | $C_2H_5$ | 54 - 57 |
| 93 | " | H | " | $CH_2=CH_2=CH-CH_2$ | |
| 94 | 4-(p-Chlorbenzyloxy)-phenyl | H | " | " | 78 - 80 |
| 95 | " | H | " | $C_2H_5$ | 120 - 123 |
| 96 | 4-(p-Methylbenzyloxy)-phenyl | H | " | $CH_2=CH-CH_2$ | 99 - 102 |
| 97 | " | H | " | $C_2H_5$ | 82 - 83 |
| 98 | 4-(p-Nitrobenzyloxy)-phenyl | H | " | " | |
| 99 | " | H | " | $CH_2=CH-CH_2$ | |
| 101 | 4-Methylsulfinylphenyl | H | " | $C_2H_5$ | |
| 102 | 4-Methylsulfinylphenyl | H | n-$C_3H_7$ | $CH_2=CH-CH_2$ | |
| 103 | 4-Ethylsulfonylphenyl | H | " | $C_2H_5$ | |
| 104 | " | H | " | $CH_2=CH-CH_2$ | |
| 105 | 2-Ethylsulfonylphenyl | H | " | " | |
| 106 | " | H | " | $C_2H_5$ | |
| 107 | 3-Trifluormethyl-phenyl | $COOCH_3$ | n-$C_3H_7$ | $CH_2=CH-CH_2$ | |
| 108 | " | " | " | $C_2H_5$ | |
| 109 | 4-Trifluormethylphenyl | H | " | " | 65 - 67 |
| 110 | " | H | " | $CH_2=CH-CH_2$ | |
| 111 | " | H | $C_2H_5$ | " | |
| 112 | " | H | " | $C_2H_5$ | 68 - 71 |
| 113 | 4-Methylsulfonyloxy-phenyl | $COOCH_3$ | n-$C_3H_7$ | $CH_2=CH-CH_2$ | |
| 114 | " | " | " | $C_2H_5$ | |
| 115 | 2,4-Dimethoxyphenyl | H | $C_2H_5$ | $C_2H_5$ | 81 - 82 |
| 116 | " | H | " | $CH_2=CH-CH_2$ | 73 - 74 |
| 117 | 2,4-Dimethoxyphenyl | $COOCH_3$ | n-$C_3H_7$ | $C_2H_5$ | 1,5321 (23) |
| 118 | " | " | " | $CH_2=CH-CH_2$ | 1,5432 (23) |
| 119 | " | H | " | $C_2H_5$ | 92 |
| 120 | " | H | " | $CH_2=CH-CH_2$ | |
| 121 | 3,4-Dimethoxyphenyl | H | " | $C_2H_5$ | |
| 122 | " | H | " | $CH_2=CH-CH_2$ | 1,5561 (22) |
| 123 | " | H | $C_2H_5$ | " | |
| 124 | " | H | " | $C_2H_5$ | |
| 125 | 2-Chlor-4-nitrophenyl | $COOCH_3$ | $C_2H_5$ | $C_2H_5$ | 105 - 106° C |
| 126 | " | " | " | $CH_2=CH-CH_2$ | |
| 127 | " | H | n-$C_3H_7$ | $C_2H_5$ | 119 - 121 |
| 128 | " | H | " | $CH_2=CH-CH_2$ | 80 - 82 |
| 129 | " | H | $C_2H_5$ | $C_2H_5$ | 125 - 126 |
| 130 | " | H | " | $CH_2=CH-CH_2$ | |
| 131 | 3,4-Dichlorphenyl | H | n-$C_3H_7$ | $CH_2=CH-CH_2$ | |
| 132 | " | $COOCH_3$ | " | " | |
| 133 | " | " | " | $C_2H_5$ | |
| 134 | " | H | " | " | |

| | | | | | |
|---|---|---|---|---|---|
| 135 | 2,4-Dichlorphenyl | $COOCH_3$ | " | $CH_2=CH-CH_2$ | |
| 136 | " | " | " | $C_2H_5$ | |
| 137 | " | H | " | $CH_2=CH-CH_2$ | 75 |
| 138 | " | H | " | $C_2H_5$ | 102 |
| 139 | 2,6-Dichlorphenyl | H | " | " | 1,5760 (21) |
| 140 | " | H | " | $CH_2=CH-CH_2$ | |
| 141 | 2-Chlor-6-fluorphenyl | H | " | $C_2H_5$ | 1,5532 (26) |
| 142 | " | H | " | $CH_2=CH-CH_2$ | 1,5575 (26) |
| 143 | 4-Methoxy-3-methylphenyl | H | $n-C_3H_7$ | $CH_2=CH-CH_2$ | |
| 144 | " | H | " | $C_2H_5$ | |
| 145 | " | H | $C_2H_5$ | " | |
| 146 | " | H | " | $CH_2=CH-CH_2$ | |
| 147 | 4-(2,4-Dichlorphenoxy)--3-nitrophenyl | $COOCH_3$ | $n-C_3H_7$ | $CH_2=CH-CH_2$ | |
| 148 | " | " | " | $C_2H_5$ | |
| 149 | 2,3,4-Trimethoxyphenyl | H | " | " | 70 - 71 |
| 150 | " | H | " | $n-C_3H_7$ | 1,5325 (26) |
| 151 | " | H | " | $CH_2=CH-CH_2$ | 1,5424 (26) |
| 152 | " | H | $C_2H_5$ | $C_2H_5$ | 50 |
| 153 | " | H | " | $n-C_3H_7$ | 1,5449 (22) |
| 154 | " | H | " | $CH_2=CH-CH_2$ | 1,5555 (22) |
| 155 | 2,4,5-Trimethoxyphenyl | H | $C_2H_5$ | $C_2H_5$ | 1,5552 (26) |
| 156 | " | H | " | $n-C_3H_7$ | 1,5482 (26) |
| 157 | " | H | " | $CH_2=CH-CH_2$ | 1,5581 (26) |
| 158 | 3,4,5-Trimethoxyphenyl | H | " | " | |
| 159 | " | H | " | $C_2H_5$ | |
| 160 | " | H | $n-C_3H_7$ | " | |
| 161 | " | H | " | $CH_2=CH-CH_2$ | |
| 162 | 4-Methoxy-2,3,6-tri-methylphenyl | H | " | $C_2H_5$ | 1,5506 (24) |
| 163 | " | H | " | $n-C_3H_7$ | |
| 164 | " | H | " | $H-C=C-CH_2$ | 1,5600 (24) |
| 165 | " | H | " | $ClCH=CH-CH_2$ | 1,5625 (24) |
| 166 | 4-Methoxy-2,3,6-tri-methylphenyl | H | $C_2H_5$ | $C_2H_5$ | 1,5572 (24) |
| 167 | " | H | " | $CH_2=CH-CH_2$ | 1,5602 (24) |
| 168 | " | H | " | $n-C_3H_7$ | |
| 169 | 4-Methoxymethylphenyl | H | $n-C_3H_7$ | $CH_2=CH-CH_2$ | 1,5501 (23) |
| 170 | " | H | " | $C_2H_5$ | |
| 171 | 4-Methoxymethylphenyl | H | $n-C_3H_7$ | $n-C_3H_7$ | 34 - 35 |
| 172 | " | H | $C_2H_5$ | $C_2H_5$ | |
| 173 | " | H | " | $CH_2=CH-CH_2$ | |
| 174 | 4-Methoxyethoxyphenyl | H | $n-C_3H_7$ | " | |
| 175 | " | H | " | $C_2H_5$ | 62 - 64 |
| 176 | 4-Methoxymethoxyphenyl | H | $n-C_3H_7$ | " | |
| 177 | " | H | " | $CH_2=CH-CH_2$ | |
| 179 | 2-(But-2-enyloxy)-phenyl | H | $n-C_3H_7$ | $n-C_3H_7$ | zähes Öl |
| 180 | 2-(But-2-enyloxy)-phenyl | H | $C_2H_5$ | $C_2H_5$ | 1,5561 (25) |
| 181 | 2-(But-2-enyloxy)-phenyl | H | $C_2H_5$ | Allyl | 1,5620 (25) |
| 182 | 2-(But-2-enyloxy)-phenyl | H | $C_2H_5$ | $n-C_3H_7$ | 1,5519 (25) |
| 183 | 3-Methoxy-phenyl | $COOCH_3$ | $C_2H_5$ | $C_2H_5$ | 1,5378 (28) |
| 184 | 3-Phenoxy-phenyl | H | $n-C_3H_7$ | Allyl | zähes Öl |
| 185 | 3,5-Dichlorphenyl | H | $n-C_3H_7$ | $C_2H_5$ | 1,5684 (25) |
| 186 | 3,5-Dichlorphenyl | H | $n-C_3H_7$ | Allyl | 1,5778 (25) |
| 187 | 4-Methoxy-3-nitrophenyl | H | $n-C_3H_7$ | $C_2H_5$ | 71 - 73 |
| 188 | 4-Trifluormethyl-phenyl | H | $CH_3$ | $C_2H_5$ | 67 - 70 |
| 189 | 4-Trifluormethyl-phenyl | H | $CH_3$ | Allyl | 58 - 60 |
| 190 | 3-Methyl-4-nitro-phenyl | H | $n-C_3H_7$ | Ethyl | |

$^1$H-NMR-spektroskopische Daten: Chemische Verschiebung in δ-Werten [ppm] in $CDCl_3$, bezogen auf Tetramethylsilan als internen Standard.

Abkürzungen für Signalstrukturen:

s = Singulett d = Dublett
q = Quartett m = Multiplett

| Verbindung Nr. | $-NH-O-CH_2-$ | |
|---|---|---|
| 1 | 4,11 (q) | 3,87 $CH_3O$ |
| 3 | 4,52 (d) | 3,84 $CH_3O$ |
| 11 | 4,54 (d) | 6,8 (m); 7,2 (m) $H_{arom.}$ |
| 20 | 4,13 (s) | 7,6 (m); 8,1 (m) $H_{arom.}$ |
| 38 | 4,55 (d) | 7,15 (m) $H_{arom.}$ |
| 53 | 4,10 (q) | 1,30 (s) $(CH_3)_3C$ |
| 68 | 4,53 (d) | 3,60 (s) $COOCH_3$ |
| 70 | 4,10 (q) | 5,90 (m) $H-CF_2-$ |
| 73 | 4,10 (q) | 3,40 (m) C5-H |
| 107 | 4,50 (d) | 3,75 (m) C5-H |
| 113 | 4,53 (d) | 3,60 (s) $COOCH_3$ |
| 131 | 4,55 (d) | 7,10 (d) $H_{arom.}$ |
| 132 | 4,56 (d) | 3,60 (s) $COOCH_3$ |
| 135 | 4,55 (d) | 3,68 (s) $COOCH_3$ |
| 140 | 4,58 (d) | 7,30 (m) $H_{arom.}$ |
| 147 | 4,55 (d) | 7,9 (s) $H_{arom.}$ |

| | |
|---|---|
| 2 | 3,59 (s, 3H); 3,82 (s, 3H); 4,52 (d,2); 6,87 (m, 2H); 7,15 (m, 2H) |
| 4 | 1,20 (t, 3H); 1,34 (t, 3H); 3,60 (s, 3H); 3,83 (s, 3H); 4,11 (m, 2H) |
| 12 | 3,8 (s, 3H); 4,6 (d, 2H), 6,85 (m, 3H); 7,3 (m, 1H) |
| 13 | 3,8 (s, 3H); 4,1 (q, 2H); 6,85 (m, 3H), 7,3 (m, 1H) |
| 21 | 0.98 (t, 3H); 3,6 (s, 3H); 4,53 (d, 2H); 7,55 (m, 2H); 8,09 (m, 2H) |
| 22 | 1,18 (t, 3H); 1,36 (t, 3H); 3,6 (s, 3H); 4,13 (q, 2H); 7,50 (m, 2H), 8,09 (m, 2H) |
| 23 | 1,18 (t, 3H), 3,59 (s, 3H), 4,52 (d, 2H), 7,48 (m, 2H); 8,08 (m, 2H) |
| 24 | 0,98 (t, 3H), 1,36 (t, 3H); 4,10 (q, 2H); 7,52 (m, 2H); 8,09 (m, 2H) |
| 82 | 1,14 (t, 3H), 1,30 (t, 3H); 4,08 (q, 2H), 4,64 (d, 2H); 6,89 (d, 2H); 7,13 (d, 2H) |
| 84 | 0,98 (t, 3H); 1,14 (t, 3H); 3,98 (t, 2H); 4,61 (d, 2H); 6,84 (d, 2H); 7,09 (d, 2H) |
| 90 | 1,0 (t, 3H); 1,32 (t, 3H); 1,75 (d, 3H); 4,10 (q, 2H), 4,50 (m, 2H); 5,76 (m, 2H) |
| 91 | 1,02 (t, 3H); 1,78 (d, 3H); 4,54 (m, 4H); 5,80 (m, 2H);. 6,7-7,4 (m, 4H) |
| 101 | 0,96 (t, 3H); 1,30 (t, 3H); 2,68 (s, 3H); 4,04 (g, 2H); 7,36 (d, 2H); 7,58 (d, 2H) |
| 121 | 0,98 (t, 3H); 1,32 (t, 3H); 3,90 (s, 6H); 4,12 (9, 2H); 6,80 (m, 3H) |
| 123 | 1,18 (t, 3H); 3,89 (s, 6H); 4,57 (d, 2H); 6,81 (m, 3H) |
| 143 | 0,98 (t, 3H); 2,22 (s, 3H); 3,81 (s, 3H), 4,56 (d, 2H); 6,7-7,15 (m, 3H) |
| 144 | 0,98 (t, 3H); 1,31 (t, 3H); 2,22 (s, 3H); 3,80 (s, 3H); 4,11 (q, 2H), 6,7-7,25 (m, 3H) |
| 169 | 0,98 (t, 3H); 3,38 (s, 3H); 4,44 (s, 2H), 4,56 (d, 2H); 7,24 (d, 2H); 7,33 (d, 2H) |
| 170 | 0,98 (t, 3H); 1,32 (t, 3H); 3,38 (s, 3H); 4,13 (q, 2H); 4,44 (s, 2H); 7,24 (d, 2H); 7,33 (d, 2H) |
| 179 | 2,93 (m, 2H); 4,5 (m, 2H); 5,7 (m, 2H); 6,7-7,4 (m, 4H) |
| 184 | 0,95 (t, 3H), 2,93 (t, 2H); 4,48 (d, 2H); 5,3 (m, 2H); 5,9 (m, 1H) |
| 190 | 1,0 (t, 3H); 1,35 (t, 3H); 2,6 (s, 3H); 7,9 (d, 2H). |

Die Cyclohexan-1,3-dionderivate der Formel I und ihre Salze können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Hineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure,

Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenoläther, ethoxyliertes Isooctylphenol, Octylphenol, Nonylphenol, Alkylphenolpolyglykolether, Tributylphenylpolyglykolether, Alkylerylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an festen Trägerstoffen hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten zwischen 0,1 und 95 Gewichtsprozent, vorzugsweise zwischen 0,5 und 90 Gewichtsprozent, Wirkstoff.

Beispiele für Formulierungen sind:

I. Man vermischt 90 Gewichtsteile der Verbindung Nr. 109 mit 10 Gewichtsteilen N-Methyl-alpha-pyrrolidon und erhält eine Lösung, die zur Anwendung in Form kleinster Tropfen geeignet ist.

II. 20 Gewichtsteile der Verbindung Nr. 162 werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gewichtsprozent des Wirkstoffs enthält.

III. 20 Gewichtsteile der Verbindung Nr. 52 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteile des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

IV. 20 Gewichtsteile des Wirkstoffs Nr. 167 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

V. 20 Gewichtsteile des Wirkstoffs Nr. 62 werden mit 3 Gewichtsteilen des Natriumsalzes der Diisobutylnaphthalin-alpha-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gewichtsprozent des Wirkstoffs enthält.

VI. 3 Gewichtsteile des Wirkstoffs Nr. 166 werden mit 97 Gewichtsteilen feinteiligem Kaolin vermischt. Man erhält auf diese Weise ein Stäubemittel, das 3 Gewichtsprozent des Wirkstoffs enthält.

VII. 30 Gewichtsteile des Wirkstoffs Nr. 175 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 20 Teile des Wirkstoffs Nr. 171 werden mit 2 Teilen Calciumsalz der Dodecylbenzolsulfonsäure, 8 Teilen Fettalkohol-polyglykolether, 2 Teilen Natriumsalz eines Phenol-Harnstoff-Formaldehyd-Kondensates und 68 Teilen eines paraffinischen Mineralöls innig vermischt. Man erhält eine stabile ölige Dispersion.

Die Applikation kann im Vorauflauf- oder im Nachauflaufverfahren erfolgen. Sind die Wirkstoffe bei Nachauflaufanwendung für gewisse Kulturpflanzen weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff betragen je nach Jahreszeit, Zielpflanzen und Wachstumsstadium 0,025 bis 4 kg/ha, vorzugsweise 0,1 bis 3 kg/ha.

Die herbizide Wirkung der Cyclohexan-1,3-dionderivate der Formel I läßt sich durch Gewächshausversuche zeigen:

Als Kulturgefäße dienen Plastikblumentöpfe mit 300 $cm^3$ Inhalt und lehmigem Band mit etwa 1,5 % Humus als Substrat. Die Samen der Testpflanzen werden nach Arten getrennt flach eingesät. Bei

Vorauflaufbehandlung werden die Wirkstoffe unmittelbar danach auf die Erdoberfläche aufgebracht. Sie werden hierzu in Wasser als Verteilungsmittel suspendiert oder emulgiert und mittels fein verteilender Düsen gespritzt. Bei dieser Applikationsmethode betragen die Aufwandmengen 3,0 kg Wirkstoff/ha.

Nach dem Aufbringen der Mittel werden die Gefäß leicht beregnet, um Keimung und Wachstum in Gang zu bringen. Danach deckt man die Gefäße mit durchsichtigen Plastikhauben ab, bis die Pflanzen angewachsen sind. Diese Abdeckung bewirkt ein gleichmäßiges Keimen der Testpflanzen sofern dies nicht durch die Wirkstoffe beeinträchtigt wird.

Zum Zwecke der Nachauflaufbehandlung zieht man die Testpflanzen je nach Wuchsform erst bis zu einer Wuchshöhe von 3 bis 15 cm an und behandelte sie danach. Die Sojapflanzen werden in einem mit Torfmull (peat) angereicherten Substrat angezogen. Zur Nachauflaufbehandlung werden entweder direkt gesäte und in den gleichen Gefäßen aufgewachsene Pflanzen ausgewählt, oder aber solche, die erst als Keimpflanzen getrennt angezogen und einige Tage vor der Behandlung in die Versuchsgefäße verpflanzt werden. Die Aufwandmengen für die Nachauflaufbehandlung variieren zwischen 0,125 und 1,0 kg Wirkstoff/ha. Eine Abdeckung unterbleibt bei der Nachauflaufbehandlung.

Die Versuchsgefäße werden im Gewächshaus aufgestellt, wobei für wärmeliebende Arten wärmere Bereiche (20 bis 35°C) und für solche gemäßigter Klimate 10 bis 25°C bevorzugt werden. Die Versuchsperiode erstreckt sich über 2 bis 4 Wochen. Während dieser Zeit werden die Pflanzen gepflegt, und ihre Reaktion auf die einzelnen Behandlungen wird ausgewertet. Bewertet wird nach einer Skala von 0 bis 100. Dabei bedeutet 100 kein Aufgang der Pflanzen bzw. völlige Zerstörung zumindest der oberirdischen Teile.

Die in den Gewächshausversuchen verwendeten Pflanzen setzen sich aus folgemden Arten zusammen:

Alopecurus myosuroides (Ackerfuchsschwanz), Avena fatua (Flughafer), Beta vulgaris (Zuckerrüben), Echinochloa crus-gali (Hühnerhirse), Glycine max. (Sojabohnen), Gossypium hirsutum (Baumwolle), Hordeum vulgare (Gerste), Lolium multiflorum (Ital. Raygras), Oryza sativa (Reis), Setaria italica (Kolbenhirse), Sorghum halepense (Sudangras), Triticum aestivum (Weizen).

Als Vergleichsmittel dienen die aus DE-OS-2 439 104 bekannten Verbindungen 2-(1-Allyloxy-butyliden)-5-(4-methoxy-phenyl)-cyclohexan-1,3-dion (A) sowie 2-(1-Ethoxyaminopropyliden)-5-(4-methyl-phenyl)-cyclohexan-1,3-dion (B).

Bei Vorauflaufanwendung im Gewächshaus zeigen beispielsweise die Verbindungen Nr. 20, 52, 61, 175, 123, 76, 122, 121, 154, 151, 149, 156, 166, 165, 164, 163, 162, 73, 96, 87, 86, 140, 139, 142, 167, 169, 170, 171 mit 3,0 kg Wirkstoff/ha eine beachtliche herbizide Aktivität gegen Grasarten.

Bei Nachauflaufversuchen bekämpfen beispielsweise die Verbindungen Nr. 171 und 53 mit 0,5 bzw. 1,0 kg Wirkstoff/ha unerwünschte Gräser selektiv in der Getreideart Gerste. Die Verbindungen Nr. 62 und 175 bekämpfen mit 0,125 kg Wirkstoff/ha unerwünschte Gräser in Weizen, ohne diesen zu schädigen, während das Vergleichsmittel A bei der gleichen Aufwandmenge zum einen schwächer gegen unerwünschte Gräser ist und zum anderen noch Schäden an der Kulturpflanze verursacht. Bei Aufwandmengen von 0,25 bzw. 1,0 kg Wirkstoff/ha sind beispielsweise die Verbindungen Nr. 60, 61, 79, 80, 85 bei vergleichbarer Wirkung gegen unerwünschte Gräser verträglicher für Weizen als das Vergleichsmittel A. Im Vergleich zu dem bekannten Wirkstoff B ist beispielsweise die Verbindung Nr. 109 sehr selektiv für Gerste und Weizen.

Zur Bekämpfung unerwünschter Gräser in breitblättrigen Kulturen, wie Zuckerrüben und Baumwolle, eignen sich beispielsweise die Verbindungen Nr. 52, 86, 87 mit 0,5 kg Wirkstoff/ha bei Nachauflaufanwendung. Ebenfalls im Nachauflaufverfahren wirken die Verbindungen Nr. 101, 162, 166, 167, 168, 169 mit 0,5 kg/ha gegen unerwünschte Gräser; sie sind selektiv in Soja.

In Anbetracht der Verträglichkeit der Applikationsmethoden können die erfindungsgemäßen Verbindungen noch in einer weiteren Zahl von Kulturpflanzen zur Beseitigung unerwünschter Wildgräser oder grasartiger Kulturpflanzen, sofern sie an gewissen Standorten unerwünscht sind, eingesetzt werden. In Betracht kommen beispielsweise folgende Kulturen:

| **Botanischer Name** | **Deutscher Name** |
|---|---|
| Allium cepa | Küchenzwiebel |
| Ananas comosus | Ananas |
| Arachis hypogaea | Erdnuß |
| Asparagus officinalis | Spargel |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rübsen |
| Camellia sinensis | Teestrauch |
| Carthamus tinctorius | Saflor - Färberdistel |
| Carya illinoinensis | Pekannußbaum |

| | |
|---|---|
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |
| Cucumis melo | Melone |
| Cucumis sativus | Gurke |
| Cynodon dactylon | Bermudagras |
| Daucus carota | Möhre |
| Elaeis guineensis | Ölpalme |
| Fragaria vesca | Erdbeere |
| Glycine max | Sojabohne |
| Gossypium hirsutum (Gossypium arboreum Gossypium herbaceum Gossypium vitifolium) | Baumwolle |
| Helianthus annuus | Sonnenblume |
| Helianthus tuberosus | Topinambur |
| Hevea brasiliensis | Parakautschukbaum |
| Humulus lupulus | Hopfen |
| Ipomoea batatas | Süßkartoffeln |
| Juglans regia | Walnußbaum |
| Lactua sativa | Kopfsalat |
| Lens culinaris | Linse |
| Linum usitatissimum | Faserlein |
| Lycopersicon lycopersicum | Tomate |
| Malus spp. | Apfel |
| Manihot esculenta | Maniok |
| Medicago sativa | Luzerne |
| Mentha piperita | Pfefferminze |
| Musa spp. | Obst- und Mehlbanan |
| Nicotiana tabacum (N. rustica) | Tabak |
| Olea europaea | Ölbaum |
| Phaseolus lunatus | Mondbohne |
| Phaseolus mungo | Erdbohne |
| Phaseolus vulgaris | Buschbohne |
| Petroselinum crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus dulcis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sesamum indicum | Sesam |
| Solanum tuberosum | Kartoffel |
| Sorghum bicolor (s. vulgare) | Mohrenhirse |
| Sorghum dochna | Zuckerhirse |
| Spinacia oleracea | Spinat |
| Theobroma cacao | Kakaobaum |

| | |
|---|---|
| Trifolium pratense | Rotklee |
| Triticum aestivum | Weizen |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |
| Zea mays | Mais (post directed, only) |

Zur Verbreiterung des Wirkungsspektrums und zur Erzielung synergistischer Effekte können die Cyclohexan-1,3-dionderivate der Formel I bzw. die sie enthaltenden Mittel auch mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Triazinone, Uracile, andere Cyclohexan-1,3-dionderivate, Benzofuranderivate und andere in Betracht.

Außerdem kann es von Nutzen sein, die Cyclohexan-1,3-dionderivate der Formel I allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Bekämpfung von Ernährungs- und Spurenelementmängeln eingesetzt werden.

## Patentansprüche

1. Cyclohexan-1,3-dion-derivate der Formel

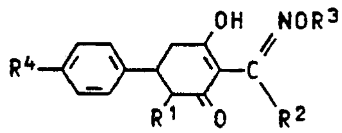

(I),

in der

$R^4$ fluorsubstituiertes $C_1$-$C_3$-Alkoxy, $C_3$-$C_5$-Alkinyloxy, Trifluormethyl,

$R^1$ Wasserstoff, Methoxycarbonyl, Ethoxycarbonyl, Methyl oder Cyano,

$R^2$ $C_1$-$C_4$-Alkyl und

$R^3$ $C_1$-$C_3$-Alkyl, $C_3$- oder $C_4$-Alkenyl, $C_3$- oder $C_4$-Halogenalkenyl mit 1 bis 3 Halogensubstituenten oder Propargyl bedeuten,

und Salze dieser Verbindungen.

2. Cyclohexan-1,3-dionderivate der Formel I gemäß Anspruch 1, dadurch gekennzeichnet, daß $R^1$ Wasserstoff bedeutet.

3. Verfahren zur Herstellung von Cyclohexan-1,3-dionderivaten der Formel I gemäß Anspruch 1, dadurch gekennzeichnet, daß man sine Verbindung der Formel

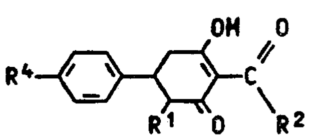

(II),

in der

$R^1$, $R^2$ und $R^4$ die im Anspruch 1 genannten Bedeutungen haben,

a) mit einer Ammoniumverbindung der Formel $R^3O$-$NH_3Y$, in der $R^3$ die im Anspruch 1 genannten Bedeutungen hat und Y ein Anion bedeutet, in einem inerten Verdünnungsmittel gegebenenfalls in Gegenwart von Wasser bei einer Temperatur zwischen 0 und 80°C in Gegenwart einer Base oder

b) mit einem gegebenenfalls in wäßriger Lösung vorliegenden Hydroxylamin der Formel $R^3O$-$NH_2$, in der $R^3$ die im Anspruch 1 genannten Bedeutungen hat, in einem inerten Lösungsmittel umsetzt.

4. Herbizid, enthaltend ein Cyclohexan-1,3-dionderivat der Formel I gemäß Anspruch 1.

5. Herbizid, enthaltend inerte Zusatzstoffe und ein Cyclohexan-1,3-dionderivat der Formel I oder ein Salz eines solchen Cyclohexandionderivats gemäß Anspruch 1.

6. Verfahren zur Bekämpfung unerwünschten Pflanzenwachstums, dadurch gekennzeichnet, daß man die unerwünschten Pflanzen und/oder die von unerwünschten Pflanzenwachstum freizuhaltende Fläche mit einer herbizid wirksamen Menge eines Cyclohexan-1,3-dionderivates der Formel I gemäß Anspruch 1 behandelt.

**Claims**

1. A cyclohexane-1,3-dione derivative of the formula

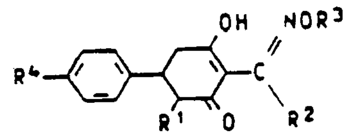

(I),

where $R^4$ is fluorine-substituted $C_1$-$C_3$-alkoxy, $C_3$-$C_5$-alkynyloxy, trifluoromethyl, $R^1$ is hydrogen, methoxycarbonyl, ethoxycarbonyl, methyl or cyano, $R^2$ is $C_1$-$C_4$-alkyl, and $R^3$ is $C_1$-$C_3$-alkyl, $C_3$- or $C_4$-alkenyl, $C_3$- or $C_4$-haloalkenyl having 1, 2 or 3 halogen substituents, or propargyl, or a salt thereof.

2. A cyclohexane-1,3-dione derivative of the formula I as claimed in claim 1, where $R^1$ is hydrogen.

3. A process for the preparation of a cyclohexane-1,3-dione derivative of the formula I as claimed in claim 1, wherein a compound of the formula

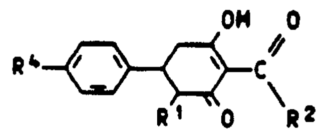

(II),

where $R^1$ $R^2$ and $R^4$ have the meanings given in claim 1, is reacted with

a) an ammonium compound of the formula $R^3O$-$NH_3Y$, where $R^3$ has the meanings given in claim 1 and Y is an anion, in an inert diluent, in the presence or absence of water, at from 0° to 80°C, and in the presence of a base, or

b) a hydroxylamine, if desired in aqueous solution, of the formula $R^3O$-$NH_2$, where $R^3$ has the meanings given in claim 1, in an inert solvent.

4. A herbicide containing a cyclohexane-1,3-dione derivative of the formula I as claimed in claim 1.

5. A herbicide containing inert additives and a cyclohexane-1,3-dione derivative of the formula I as claimed in claim 1, or a salt thereof.

6. A process for combating the growth of unwanted plants, wherein the unwanted plants and/or the area to be kept free from unwanted plant growth are treated with a herbicidally effective amount of a cyclohexane-1,3-dione derivative of the formula I as claimed in claim 1.

**Revendications**

1. Dérivés de cyclohexane-1,3-dione de formule

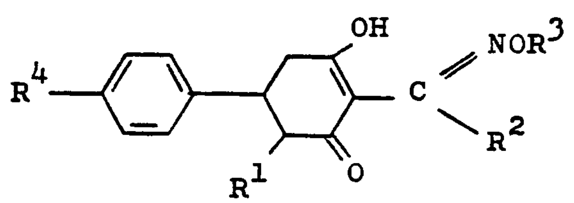

(I),

dans laquelle

$R^4$ représente alcoxy en $C_1$-$C_3$ substitué par du fluor, alcinyloxy en $C_3$-$C_5$, trifluorométhyle,

$R^1$ represente hydrogène, methoxycarbonyle, ethoxycarbonyle, méthyle ou cyano,

$R^2$ représente alkyle en $C_1$-$C_4$ et

$R^3$ représente alkyle en $C_1$-$C_3$, alcényle en $C_3$ ou $C_4$, halogénalcényle en $C_3$ ou $C_4$ avec 1 à 3 substituants halogène ou propargyle et sels de ces composés.

2. Dérivés de cyclohexane-1,3-dione de formule I selon la revendication 1, caractérisés par le fait que $R^1$ représente hydrogène.

3. Procédé de préparation de dérivés de cyclohexane-1,3-dione de formule I selon la revendication 1, caractérisé par le fait que l'on fait réagir un composé de formule

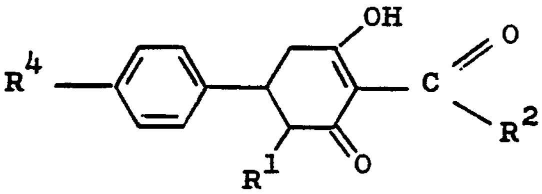

(II)

dans laquelle

$R^1$, $R^2$ et $R^4$ ont les significations indiquées dans la revendication 1,

a) avec un dérivé d'ammonium de formule $R^3O\text{-}NH_3Y$, dans laquelle $R^3$ a la signification donnée dans la revendication 1 et Y représente un anion dans un diluant inerte, éventuellement en présence d'eau, à une température comprise entre 0 et 80° C, en présence d'une base, ou

b) dans un solvant inerte, avec une hydroxylamine de formule $R^3O\text{-}NH_2$, dans laquelle $R^3$ a la signification donnée dans la revendication 1 et se trouvant éventuellement en solution aqueuse.

4. Herbicide contenant un dérivé de cyclohexane-1,3-dione de formule I selon la revendication 1.

5. Herbicide contenant des additifs inertes et un dérivé de cyclohexane-1,3-dione de formule I, ou un sel d'un tel dérivé de cyclohexanedione selon la revendication 1.

6. Procédé de lutte contre la croissance de plantes indésirables, caractérisé par le fait que l'on traite les plantes indésirables et/ou les surfaces à maintenir libres de la croissance des plantes indésirables, avec une quantité, efficace du point de vue herbicide, d'un dérivé de cyclohexane-1,3-dione de formule I selon la revendication 1.